# EUROPEAN PATENT APPLICATION

(11) **EP 4 116 742 A1**
(43) Date of publication of application: **11.01.2023**
(21) Application number: 21765059.7
(22) Date of filing: 26.02.2021
(51) Int. Cl.: G01T 1/169, G21D 1/00

(54) **DEVICE FOR IMAGING RADIATION SOURCE IN DECOMMISSIONING AREA OF NUCLEAR POWER PLANT**

(30) Priority: 02.03.2020 KR 20200026148
(71) Applicant: Korea Hydro & Nuclear Power Co., Ltd, 38120 Gyeongsangbuk-do (KR)
(72) Inventor: YOON, Changyeon, Daejeon 34101 (KR); JUNG, Hyejin, Daejeon 34101 (KR); SON, Jinwon, Daejeon 34101 (KR); KIM, Jungwun, Daejeon 34101 (KR)
(74) Representative: Berggren Oy
(86) International application number: PCT/KR2021/002499
(87) International publication number: WO 2021/177678

(57) **Abstract**

A device for imaging radiation source in a decommissioning area of a nuclear power plant includes a detecting unit including a plurality of pixels for detecting an X-ray spectrum generated from a decommissioning area of a nuclear power plant, a processing unit connected to the detecting unit and configured to analyze the X-ray spectrum detected from the plurality of pixels and fuse a first element image displaying first pixels from which a first characteristic X-ray energy of a first element, among the plurality of pixels, is detected and a second element image displaying second pixels from which a second characteristic X-ray energy of a second element, among the plurality of pixels, is detected, into a fused image, and a display unit connected to the processing unit and configured to display the fused image corresponding to the decommissioning area.

## Description

### [Technical Field]

The present disclosure relates to a device for imaging radiation source in a decommissioning area of a nuclear power plant.

### [Background Art]

During a decommissioning period of a nuclear power plant, there is radioactive contamination from various radiation sources located in the decommissioning area due to various decommissioning operations and various locations inside the power plant. However, since various radiation sources located in the decommissioning area are not visible to an operator, it is difficult to effectively decontaminate the decommissioning area.

Since only exposure rate information of the decommissioning area may be recognized with a conventionally used survey meter, it may be difficult to ascertain a location, distribution, and type of various radiation sources located in the decommissioning area.

### [Disclosure]

### [Technical Problem]

The present invention has been made in an effort to provide a device for imaging radiation source in a decommissioning area of a nuclear power plant having advantages of imaging positions, distributions, and types of various radiation sources located in a decommissioning area of a nuclear power plant.

### [Technical Solution]

An exemplary embodiment of the present invention provides a device for imaging radiation source in a decommissioning area of a nuclear power plant including: a detecting unit including a plurality of pixels for detecting an X-ray spectrum generated from a decommissioning area of a nuclear power plant; a processing unit connected to the detecting unit and configured to analyze the X-ray spectrum detected from the plurality of pixels and fuse a first element image displaying first pixels from which a first characteristic X-ray energy of a first element, among the plurality of pixels, is detected and a second element image displaying second pixels from which a second characteristic X-ray energy of a second element, among the plurality of pixels, is detected, into a fused image; and a display unit connected to the processing unit and configured to display the fused image corresponding to the decommissioning area.

The processing unit may be configured to analyze the X-ray spectrum detected from the plurality of pixels and fuse a third element image displaying third pixels from which a third characteristic X-ray energy of a third element, among the plurality of pixels, is detected, into the fused image.

The processing unit may be configured to analyze the X-ray spectrum detected from the plurality of pixels and fuse an area image corresponding to the decommissioning area into the fused image.
the display unit may be configured to display the first pixels in a first color and the second pixels in a second color in the fused image.

The detection unit may include a collimator positioned in front of the plurality of pixels and configured to shield between the plurality of pixels.

### [Advantageous Effects]

According to one exemplary embodiment, a device for imaging radiation source in a decommissioning area of a nuclear power plant for imaging positions, distributions, and types of various radiation sources located in a decommissioning area of a nuclear power plant may be provided.

### [Description of the Drawings]

FIG. 1 is a diagram illustrating a device for imaging radiation source in a decommissioning area of a nuclear power plant according to an exemplary embodiment.
FIG. 2 is photographs showing formation of an area image by a processing unit of a device for imaging radiation source in a decommissioning area of a nuclear power plant according to an exemplary embodiment.
FIG. 3 is a graph and a photograph showing formation of a first element image by a processing unit of a device for imaging radiation source in a decommissioning area of a nuclear power plant according to an exemplary embodiment.
FIG. 4 is a graph and a photograph showing formation of a second element image by a processing unit of a device for imaging radiation source in a decommissioning area of a nuclear power plant according to an exemplary embodiment.
FIG. 5 is a graph and a photograph showing formation of a third element image by a processing unit of a device for imaging radiation source in a decommissioning area of a nuclear power plant according to an exemplary embodiment.
FIG. 6 is a photograph showing that a processing unit of a device for imaging radiation source in a decommissioning area of a nuclear power plant according to an exemplary embodiment forms a fused image in which an area image, a first element image, a second element image, and a third element image are fused.

### [Mode for Invention]

The present invention will be described more fully hereinafter with reference to the accompanying drawings, in which exemplary embodiments of the invention are shown. As those skilled in the art would realize, the described exemplary embodiments may be modified in various different ways, all without departing from the scope of the present invention.

In addition, unless explicitly described to the contrary, the word "comprise", and variations such as "comprises" or "comprising", will be understood to imply the inclusion of stated elements but not the exclusion of any other elements.

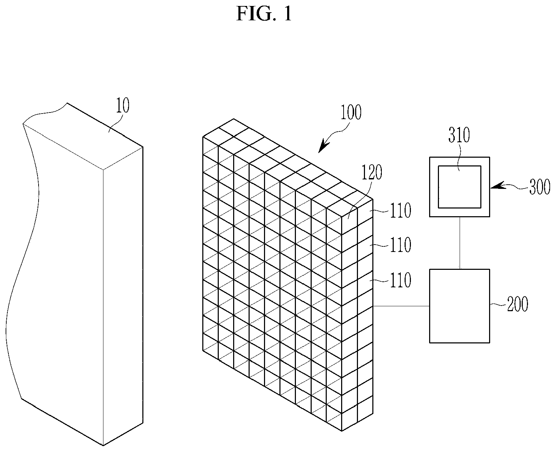

Hereinafter, a device for imaging radiation source in a decommissioning area of a nuclear power plant according to an exemplary embodiment will be described with reference to FIGS. 1 to 6.

FIG. 1 is a diagram illustrating a device for imaging radiation source in a decommissioning area of a nuclear power plant according to an exemplary embodiment.

Referring to FIG. 1, a decommissioning area 10 is an area located inside a nuclear power plant during a decommissioning period, not a nuclear power plant during an operation period. The decommissioning area 10 is a contaminated area in which various radiation sources are located, and the decommissioning area 10 requires a decontamination process for performing a decommissioning operation.

The device for imaging radiation source in a decommissioning area of a nuclear power plant according to an exemplary embodiment images positions, distributions, and types of various radiation sources located in the decommissioning area 10 as a fused image and displays the fused image on a display window 310 of a display unit 300. An operator may easily perform decontamination of the decommissioning area 10 by checking the fused image.

The device for imaging radiation source in a decommissioning area of a nuclear power plant is movable to a desired position of the operator or is portable by the operator in order to image various radiation sources located in various decommissioning areas 10. As an example, various known moving units and various portable units may be mounted in the device for imaging radiation source in the decommissioning area of the nuclear power plant.

The device for imaging radiation source in the decommissioning area of the nuclear power plant includes a detection unit 100, a processing unit 200, and a display unit 300.

The detection unit 100 includes a plurality of pixels 110 and a collimator 120.

A plurality of pixels 110 detect an X-ray spectrum generated from a decommissioning area 10 of a nuclear power plant.

The plurality of pixels 110 may include various known detection units capable of detecting an X-ray spectrum. For example, the plurality of pixels 110 may include a semiconductor material such as CdTe, CZT, or HPGe having high resolution, but is not limited thereto. The plurality of pixels 110 detects an X-ray spectrum generated from one area or the whole of the decommissioning area 10 corresponding to the plurality of pixels 110. Each of the plurality of pixels 110 has a rectangular shape in plan view, but is not limited thereto, and may have various shapes, such as polygons such as triangles, squares, and pentagons, or circles, ovals, and closed loops in plan. The plurality of pixels 110 may have various known resolutions.

The collimator 120 is positioned in front of the plurality of pixels 110 and shields between the plurality of pixels 110. The collimator 120 limits a direction and diffusion of radiation irradiated from the decommissioning area 10 to the plurality of pixels 110. Each of the plurality of pixels 110 detects an X-ray spectrum generated from each of the regions of the decommissioning area 10 corresponding to each pixel 110 by the collimator 120. The collimator 120 may include a variety of known radiation absorbing materials. As an example, the collimator 120 may include lead, tungsten, or the like, but is not limited thereto.

The processing unit 200 is connected to the detection unit 100 and analyzes the X-ray spectrum detected from the plurality of pixels 110 to form an area image, a first element image, a second element image, and a third element image, and fuses the area image, the first element image, the second element image, and the third element image into a fused image.

The processing unit 200 analyzes the X-ray spectrum detected from the plurality of pixels 110 to form an area image corresponding to the decommissioning area 10.

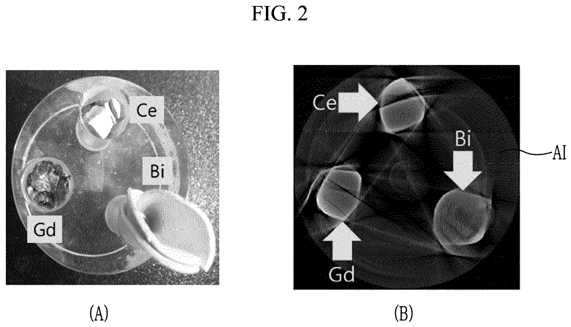

FIG. 2 is photographs showing formation of an area image by a processing unit of a device for imaging radiation source in a decommissioning area of a nuclear power plant according to an exemplary embodiment. FIG. 2A is a photograph showing a beaker containing cesium (Ce), gadolinium (Gd), and bismuth (Bi) as an example of the decommissioning area, and FIG. 2B is a photograph showing an area image AI corresponding to a beaker formed by analyzing an X-ray spectrum by the processing unit connected to the plurality of pixels, from which the X-ray spectrum generated from the beaker containing cesium (Ce), gadolinium (Gd), and bismuth (Bi) is detected.

Specifically, referring to FIGS. 1 and 2, the processing unit 200 is connected to the plurality of pixels 110 from which the X-ray spectrum generated from the beaker containing cesium (Ce), gadolinium (Gd), and bismuth (Bi) is detected as an example of the decommissioning area 10, and analyzes the X-ray spectrum to form the area image AI corresponding to the decommissioning area 10. The processing unit 200 may form the area image AI from the X-ray spectrum by using various known processing units. For example, the processing unit 200 may form the area image AI corresponding to the decommissioning area 10 using substantially the same processing unit as an X-ray imaging unit, but is not limited thereto.

That is, the processing unit 200 analyzes the X-ray spectrum detected from the decommissioning area 10 to form the area image AI corresponding to the decommissioning area 10.

The processing unit 200 analyzes the X-ray spectrum detected from the plurality of pixels 110 to form a first element image in which first pixels that have detected first characteristic X-ray energy of a first element, among the plurality of pixels 110, are displayed.

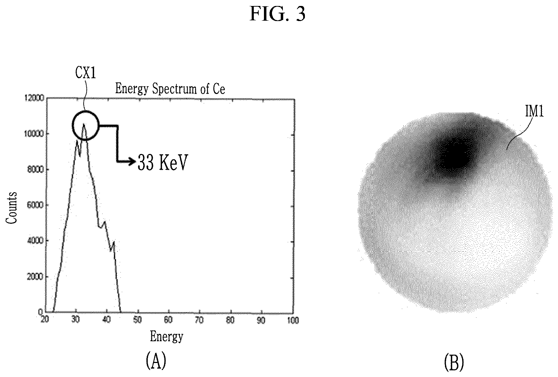

FIG. 3 is a graph and a photograph showing formation of a first element image by a processing unit of a device for imaging radiation source in a decommissioning area of a nuclear power plant according to an exemplary embodiment. FIG. 3A is a graph showing a characteristic X-ray spectrum of cesium (Ce), and FIG. 3B is a photograph showing a first element image IM1 displaying first pixels, from which a first characteristic X-ray energy CX1 of cesium (Ce), which is a first element, among the plurality of pixels 110, is detected, formed by analyzing an X-ray spectrum by the processing unit connected to the plurality of pixels, from which the X-ray spectrum generated from the beaker containing cesium (Ce), gadolinium (Gd), and bismuth (Bi), is detected.

Specifically, referring to FIGS. 1 and 3, the processing unit 200 is connected to the plurality of pixels 110 from which the X-ray spectrum generated from the beaker containing cesium (Ce), gadolinium (Gd), and bismuth (Bi) is detected as an example of the decommissioning area 10, and analyzes the X-ray spectrum to form the first element image IM1 displaying the first pixels from which 33 keV which is the first characteristic X-ray energy CX1 of cesium (Ce), which is a first element, among the plurality of pixels 110, is detected.

The first pixels displayed on the first element image IM1 may be displayed in a first color that is blue, but is not limited thereto and may be displayed in various known colors.

Here, cesium (Ce) is an example of the first element, and the first element is not limited to cesium (Ce) and may be a variety of known radiation sources such as cobalt (Co).

In addition, 33 keV which is the first characteristic X-ray energy CX1 is an example, and the first characteristic X-ray energy CX1 may be a known characteristic X-ray energy of the first element that is various known radiation sources.

That is, the processing unit 200 forms the first element image IM1 displaying the first pixels, from which 33 keV that is the first characteristic X-ray energy CX1 of cesium (Ce) which is a first element, among the plurality of pixels 110, is detected by analyzing the X-ray spectrum detected by the plurality of pixels 110 from the decommissioning area 10, thereby forming the first element image IM1 imaging a position, a distribution, and a type of the first element (e.g., cesium) which is a radiation source located in the decommissioning area 10.

The processing unit 200 forms a second element image displaying second pixels, from which a second characteristic X-ray energy of a second element, among the plurality of pixels 110, is detected by analyzing the X-ray spectrum detected from the plurality of pixels 110.

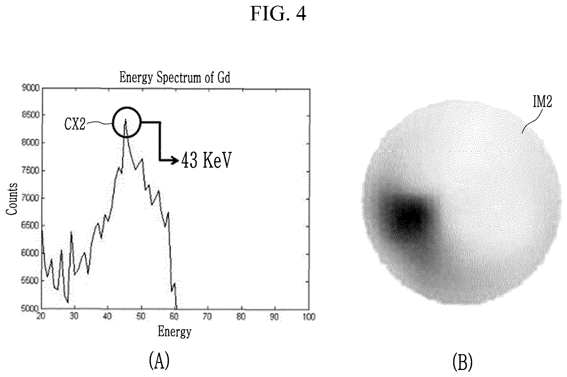

FIG. 4 is a graph and a photograph showing formation of a second element image by a processing unit of a device for imaging radiation source in a decommissioning area of a nuclear power plant according to an exemplary embodiment. FIG. 4A is a graph showing a characteristic X-ray spectrum of gadolinium (Gd), and FIG. 4B is a photograph showing a second element image IM2 displaying second pixels, from which a second characteristic X-ray energy CX2 of gadolinium (Gd), which is a second element, among the plurality of pixels 110, is detected, formed by analyzing an X-ray spectrum by the processing unit connected to the plurality of pixels, from which the X-ray spectrum generated from the beaker containing cesium (Ce), gadolinium (Gd), and bismuth (Bi).

Specifically, referring to FIGS. 1 and 4, the processing unit 200 is connected to the plurality of pixels 110 from which the X-ray spectrum generated from the beaker containing cesium (Ce), gadolinium (Gd), and bismuth (Bi) is detected as an example of the decommissioning area 10, and analyzes the X-ray spectrum to form the second element image IM2 displaying the second pixels from which 43 keV which is the second characteristic X-ray energy CX2 of gadolinium (Gd), which is a second element, among the plurality of pixels 110, is detected.

The second pixels displayed on the second element image IM2 may be displayed in a second color that is orange, but is not limited thereto and may be displayed in various known colors.

Here, gadolinium (Gd) is an example of the second element, and the second element is not limited to gadolinium (Gd) and may be a variety of known radiation sources.

In addition, 43 keV which is the second characteristic X-ray energy CX2 is an example, and the second characteristic X-ray energy CX2 may be a known characteristic X-ray energy of the second element that is various known radiation sources.

That is, the processing unit 200 forms the second element image IM2 displaying the second pixels, from which 43 keV that is the second characteristic X-ray energy CX2 of gadolinium (Gd) which is a second element, among the plurality of pixels 110, is detected by analyzing the X-ray spectrum detected by the plurality of pixels 110 from the decommissioning area 10, thereby forming the second element image IM2 imaging a position, a distribution, and a type of the second element (e.g., gadolinium) which is a radiation source located in the decommissioning area 10.

The processing unit 200 forms a third element image displaying third pixels from which a third characteristic X-ray energy of a third element, among the plurality of pixels 110, is detected by analyzing the X-ray spectrum detected from the plurality of pixels 110.

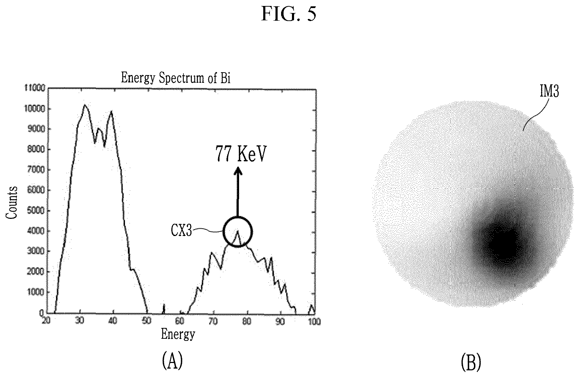

FIG. 5 is a graph and a photograph showing formation of a third element image by a processing unit of a device for imaging radiation source in a decommissioning area of a nuclear power plant according to an exemplary embodiment. FIG. 5A is a graph showing a characteristic X-ray spectrum of bismuth (Bi), and FIG. 5B is a photograph showing a third element image IM3 displaying third pixels, from which a third characteristic X-ray energy CX3 of bismuth (Bi), which is a third element, among the plurality of pixels 110, is detected, formed by analyzing an X-ray spectrum by the processing unit connected to the plurality of pixels, from which the X-ray spectrum generated from the beaker containing cesium (Ce), gadolinium (Gd), and bismuth (Bi).

Specifically, referring to FIGS. 1 and 5, the processing unit 200 is connected to the plurality of pixels 110 from which the X-ray spectrum generated from the beaker containing cesium (Ce), gadolinium (Gd), and bismuth (Bi) is detected as an example of the decommissioning area 10, and analyzes the X-ray spectrum to form the third element image IM3 displaying the third pixels from which 77 keV which is the third characteristic X-ray energy CX3 of bismuth (Bi), which is a third element, among the plurality of pixels 110, is detected.

The third pixels displayed on the third element image IM3 may be displayed in a third color that is green, but is not limited thereto and may be displayed in various known colors.

Here, bismuth (Bi) is an example of the third element, and the third element is not limited to bismuth (Bi) and may be a variety of known radiation sources.

In addition, 77 keV which is the third characteristic X-ray energy CX3 is an example, and the third characteristic X-ray energy CX3 may be a known characteristic X-ray energy of a third element that is various known radiation sources.

That is, the processing unit 200 forms the third element image IM3 displaying the third pixels, from which 77 keV that is the third characteristic X-ray energy CX3 of bismuth (Bi) which is a third element, among the plurality of pixels 110, is detected by analyzing the X-ray spectrum detected by the plurality of pixels 110 from the decommissioning area 10, thereby forming the third element image IM3 imaging a position, a distribution, and a type of the third element (e.g., bismuth) which is a radiation source located in the decommissioning area 10.

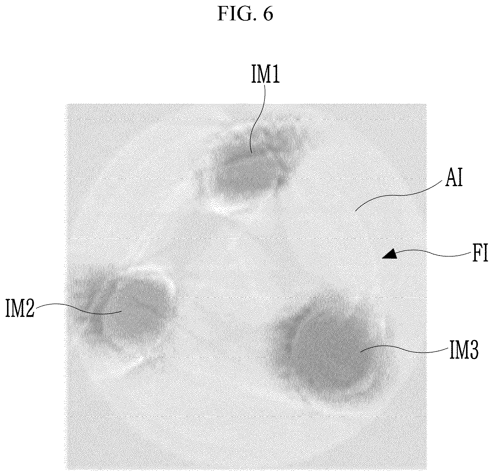

FIG. 6 is a photograph showing that a processing unit of a device for imaging radiation source in a decommissioning area of a nuclear power plant according to an exemplary embodiment forms a fused image in which an area image, a first element image, a second element image, and a third element image are fused.

Referring to FIGS. 1 and 6, the processing unit 200 fuses the area image AI corresponding to the decommissioning area 10 formed by analyzing the X-ray spectrum detected by the plurality of pixels 110 from the decommissioning area 10, the first element image IM1 imaging the position, distribution, and type of the first element (e.g., cesium), which is a radiation source located in the decommissioning area 10, the second element image IM2 imaging the position, distribution, and type of the second element (e.g., gadolinium), which is a radiation source located in the decommissioning area 10, and the third element image IM3 imaging the position, distribution, and type of the third element (e.g., bismuth), which is a radiation source located in the decommissioning area 10 into a fused image FI.

Meanwhile, the processing unit 200 may fuse only a plurality of images selected from among the area image AI, the first element image IM1, the second element image IM2, and the third element image IM3 into the fused image. For example, the processing unit 200 may fuse only the first element image IM1 and the second element image IM2 into a fused image, or only the first element image IM1, the second element image IM2, and the third element image IM3 into a fused image.

In addition, the processing unit 200 may fuse not only the three element images but also four or more element images representing pixels from which the characteristic X-ray energy unique to each element is detected by analyzing the X-ray spectrum into a fused image.

In addition, the processing unit 200 may include various known processing means such as volatile or non-volatile memory.

The display unit 300 is connected to the processing unit 200 and includes a display window 310 displaying the fused image FI corresponding to the decommissioning area 10.

As the area image AI, the first element image IM1, the second element image IM2, and the third element image IM3 are displayed on the fused image FI displayed on the display window 310, the operator may check the position, distribution, and type of each of the first element, the second element, and the third element positioned in the decommissioning area 10 through the fused image FI.

The display unit 300 may include various known display means connected to the processing unit 200 to display the fused image FI fused by the processing unit 200.

That is, a device for imaging radiation source in a decommissioning area of a nuclear power plant that images the positions, distributions, and types of various radiation sources located in the decommissioning area 10 of a nuclear power plant and displays them as a fused image FI is provided.

In this manner, as the device for imaging radiation source in a decommissioning area of a nuclear power plant according to an exemplary embodiment displays the fused image FI in which the positions, distributions, and types of various radiation sources located in the decommissioning area 10 of a nuclear power plant are imaged, the operator may perform an efficient decontamination operation on the decommissioning area 10, suitable for the positions, distributions, and types of radiation sources located in the decommissioning area 10.

In addition, the device for imaging radiation source of a decommissioning area of a nuclear power plant according to an exemplary embodiment may display a 3D image, as well as a 2D image, by detecting the decommissioning area 10 from various angles and reconstructing the image through an algorithm. That is, an area requiring decontamination may be accurately identified by using the device for imaging radiation source in a decommissioning area of a nuclear power plant according to an exemplary embodiment.

In addition, the device for imaging radiation source in a decommissioning area of a nuclear power plant according to an exemplary embodiment may not only know the range of a contaminated area to be decontaminated but also the types of constituent elements and display the contaminated area as a 2D or 3D image, so that decontamination corresponding to the exact contaminated area may be effectively performed.

In addition, each radioisotope has different characteristics, and the device for imaging radiation source in a decommissioning area of a nuclear power plant according to an exemplary embodiment may reflect an appropriate decontamination method through a composition ratio of elements recognized through characteristic X-ray energy detection.

In addition, the device for imaging radiation source in a decommissioning area of a nuclear power plant according to an exemplary embodiment may be operated remotely, thereby contributing to safe decommissioning work of the operator, and since the device for imaging radiation source in a decommissioning area of a nuclear power plant according to an exemplary embodiment is easy to carry, a measurement may be rapidly performed with a minimized work flow in an area where remote work is difficult.

In addition, the device for imaging radiation source in a decommissioning area of a nuclear power plant according to an exemplary embodiment may obtain an energy spectrum for each pixel, through which it is possible to check where and how the radioactive material is distributed by imaging a target, and at the same time, identify even if different nuclides exist variously. Since each nuclide has a different half-life and energy, it is possible to safely and economically dismantle it by performing a decontamination and waste treatment method suitable for each nuclide using a device for imaging radiation source in a decommissioning area of a nuclear power plant according to an exemplary embodiment.

In addition, the device for imaging radiation source in a decommissioning area of a nuclear power plant according to an exemplary embodiment may determine even types and distributions of nuclides, as well as imaging radioactive materials, through analysis of energy spectra detected for each pixel. Since all elements on Earth have their own characteristic X-ray energy values (for example, Ce: 34.72keV, Gd: 43.00keV, Bi: 77.11keV, etc.), images may be reconstructed for each element by reconstructing corresponding energy ranges selectively.

In addition, the device for imaging radiation source in a decommissioning area of a nuclear power plant according to an exemplary embodiment is a device capable of accurately identifying which nuclides are distributed where and how, compared to a survey meter that may identify only an exposure rate, a lump shape detector that may identify only a distribution of energy, and conventional pixel detector equipment that may only perform simple imaging in which substances cannot be distinguished. In addition, the device for imaging radiation source in a decommissioning area of a nuclear power plant according to an exemplary embodiment is a device that may perform quantitative analysis of nuclides through peak analysis of a detected X-ray spectrum.

In addition, the device for imaging radiation source in a decommissioning area of a nuclear power plant according to an exemplary embodiment capable of selecting an effective decontamination method by rapidly and accurately identifying which area is contaminated with which nuclide in a decommissioning area where the location of various radioactive materials changes every moment.

While the present invention has been described in connection with exemplary embodiments, it is to be understood that the invention is not limited to the disclosed exemplary embodiments, but, on the contrary, is intended to cover various modifications and equivalent arrangements included within the scope of the appended claims.

### -Description of reference numerals-

detecting unit 100, processing unit 200, display unit 300

## Claims

1. A device for imaging radiation source in a decommissioning area of a nuclear power plant, the device for imaging radiation source comprising:
a detecting unit including a plurality of pixels for detecting an X-ray spectrum generated from a decommissioning area of a nuclear power plant;
a processing unit connected to the detecting unit and configured to analyze the X-ray spectrum detected from the plurality of pixels and fuse a first element image displaying first pixels from which a first characteristic X-ray energy of a first element, among the plurality of pixels, is detected and a second element image displaying second pixels from which a second characteristic X-ray energy of a second element, among the plurality of pixels, is detected, into a fused image; and
a display unit connected to the processing unit and configured to display the fused image corresponding to the decommissioning area.

2. The device for imaging radiation source of claim 1, wherein:
the processing unit is configured to analyze the X-ray spectrum detected from the plurality of pixels and fuse a third element image displaying third pixels from which a third characteristic X-ray energy of a third element, among the plurality of pixels, is detected, into the fused image.

3. The device for imaging radiation source of claim 1, wherein:
the processing unit is configured to analyze the X-ray spectrum detected from the plurality of pixels and fuse an area image corresponding to the decommissioning area into the fused image.

4. The device for imaging radiation source of claim 1, wherein:
the display unit is configured to display the first pixels in a first color and the second pixels in a second color in the fused image.

5. The device for imaging radiation source of claim 1, wherein:
the detection unit includes a collimator positioned in front of the plurality of pixels and configured to shield between the plurality of pixels.
